# EUROPÄISCHE PATENTSCHRIFT

(11) **EP 0 596 274 B1**
(45) Veröffentlichungstag und Bekanntmachung des Hinweises auf die Patenterteilung: **02.01.1997**
(21) Anmeldenummer: 93116296.0
(22) Anmeldetag: 08.10.1993
(51) Int. Cl.: A47L 9/28

(54) **Drückmessgerät für einen Staubsauger**
Vacuum cleaner pressure sensor device
Dispositif mesureur de pression pour aspirateur

(30) Priorität: 04.11.1992 DE 4237150
(43) Veröffentlichungstag der Anmeldung: 11.05.1994
(73) Patentinhaber: AEG Hausgeräte GmbH, D-90429 Nürnberg (DE)
(72) Erfinder: Stettner, Gerhard, Dipl.-Ing., D-90768 Fürth (DE); Wölfel, Dieter, D-90425 Nürnberg (DE)

(56) Entgegenhaltungen:
- EP-A- 0 362 894
- EP-A- 0 375 327
- DE-A- 3 130 456
- GB-A- 2 250 596
- NL-A- 7 613 037

## Beschreibung

Die Erfindung betrifft einen Staubsauger gemäß dem Oberbegriff des Anspruchs 1.

Ein bekannter Staubsauger dieser Art (DE 37 23 626 A1) weist innerhalb seines Gerätegehäuses einen Staubsammlerraum auf, an den sich in Strömungsrichtung der zu fördernden Luft eine Kammer für ein Motorgebläse anschließt. Das Motorgebläse ist mit einer Gebläsekappe versehen, welche stirnseitig eine Ansaugöffnung aufweist, während auf die stirnseitige Kante der Gebläsehaube eine elastische Dichtung aufgesetzt ist, die als geschlossener Profilring sowohl auf die Mantelfläche wie auf die Stirnfläche der Gebläsehaube greift und die sich über den Umfang der Stirnkante erstreckt. Mit ihrer Außenseite liegt diese Dichtung an entsprechenden Wandungsteilen der Gebläsekammer an, so daß die der Stirnwand der Gebläsekappe benachbarte Ansaugseite von der gegenüberliegenden Ausblasseite der Gebläsekammer getrennt ist.

Aus der EP-A-375 327 ist ein Staubsauger bekannt, bei dem ein Drucksensor verwendet wird. Auf die konstruktive Anbringung des Drucksensors wird jedoch nicht näher eingegangen.

Der Erfindung liegt die Aufgabe zugrunde, bei einem Staubsauger gemäß dem Oberbegriff des Anspruchs 1 Maßnahmen zu treffen, durch welche ein den Unterdruck an der Saugseite erfassender Unterdrucksensor ohne besondere Hilfsmittel angeschlossen werden kann.

Die Lösung dieser Aufgabe erfolgt gemäß der Erfindung durch die kennzeichnenden Merkmale des Anspruchs 1.

Bei einer Ausgestaltung eines Staubsaugers gemäß der Erfindung wird die dem Motorgebläse als Geräuschdämpfungselement und Trennelement zwischen Saugseite und Ausblasseite angeordnete Dichtung durch den darin integrierten Luftkanal zugleich als Verbindungsmittel für den Anschluß eines Unterdrucksensors ausgenutzt. Die Dichtung wird dabei als unmittelbares Kupplungsmittel für den Unterdrucksensor bzw. einen damit verbundenen Schlauch verwendet, der aufgrund der Elastizität der Dichtung reibschlüssig in eine angepaßte Endöffnung des Luftkanals luftdicht eingesteckt werden kann. Hierfür ist der Luftkanal an seinem der Unterdruckseite abgewandten Ende vorzugsweise im Querschnitt erweitert und kann dabei insbesondere über einen Teil der axialen Länge konisch ausgebildet sein, so daß Schläuche oder auch starre Rohrstücke unterschiedlichen Durchmessers luftdicht eingesetzt werden können. Der Luftkanal kann von der Saugseite aus in radialer Richtung geradlinig oder auch entlang einer der Gebläsehaubenkontur folgenden Linie geführt sein und wird insbesondere im Anlagebereich der Dichtung mit einer äußeren Kammerwandung durch eine Öffnung in diesen Bereich nach außen in einen mit der freien Atmosphäre kommunizierenden Raum herausgeführt. Die Dichtung dichtet somit auch die Ausführungsstelle mit ab. Einer besonderen Durchführungsdichtung bedarf es somit nicht. Vorzugsweise ist das Motorgebläse im Bereich seiner Ausblasseite mittels einer Kammerwand von einem im Gerätegehäuse vorgesehenen, mit der freien Atmosphäre kommunizierenden Aufnahmeraum abgetrennt. Dabei weist die Dichtung im Bereich des Luftkanals eine denselben aufnehmende angeformte Gummitülle auf, die dichtend in die angepaßte Öffnung zwischen der Kammerwand und der übrigen Stützwand für die Dichtung eingreift. Als Unterdrucksensor kann im übrigen ein Unterdruckschalter vorgesehen sein, der ein elektrisches Anzeigeelement und/oder eine Drehzahlsteuereinrichtung für den Gebläsemotor steuert. Der Unterdrucksensor kann jedoch auch eine federbelastete Kolben-Zylinderanordnung sein, die eine Anzeigefahne abhängig vom Unterdruck in unterschiedliche Stellungen steuert.

Die Erfindung ist nachfolgend anhand der Zeichnungen von Ausführungsbeispielen näher erläutert.

Es zeigen:

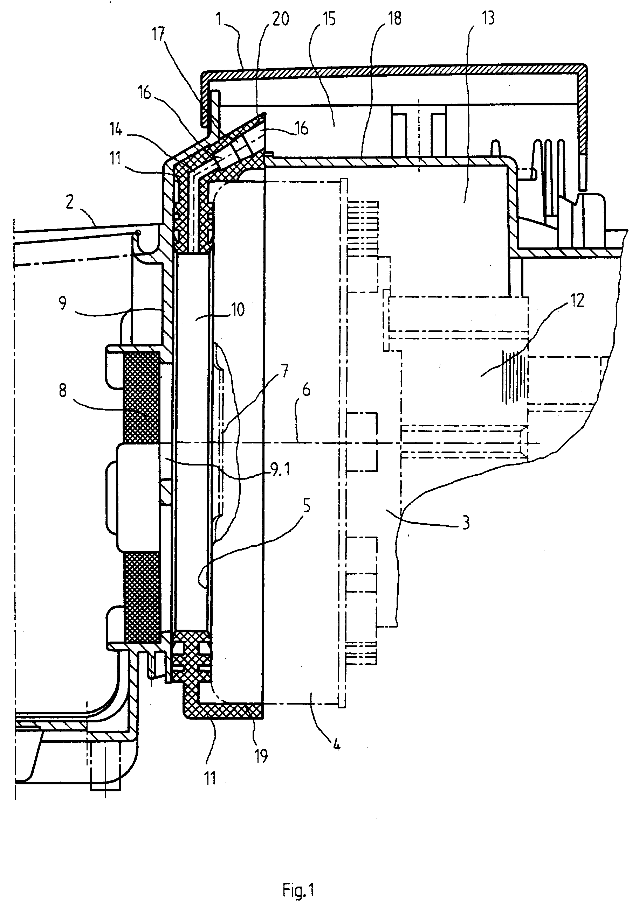

Fig. 1 einen Querschnitt durch einen teilweise dargestellten Staubsauger im Bereich des Übergangs von einem Staubsammlerraum zu einer Gebläsekammer,
Fig. 2 eine Anschlußmöglichkeit eines Unterdruckschalters und
Fig. 3 eine Anschlußmöglichkeit für ein pneumatisches Anzeigelement.

In einem nur partiell dargestellten Haushalts-Staubsauger befindet sich innerhalb eines äußeren Gerätegehäuses, von dem bei 1 ein Teil dargestellt ist, ein Staubsammlerraum 2 für die Aufnahme insbesondere eines aus Papier gefertigten Staubbeutels zur Filterung der über einen Einlaßstutzen angesaugten staubbeladenen Luft. Zur Förderung der Luft ist dem Staubsammlerraum 2 in Strömungsrichtung ein Motorgebläse 3 nachgeschaltet, dessen Gebläsekappe 4 an ihrer freien Stirnseite 5 eine mit der Gebläselängsachse 6 fluchtende Einlaßöffnung 7 aufweist. Der Einlaßöffnung 7 steht zum Staubsammlerraum 2 hin eine Durchlaßöffnung 9.1 mit einer eingesetzten Feinstaubfilterscheibe 8 in einer Trennwand 9 gegenüber. Zwischen dieser Trennwand 9 und der freien Stirnseite 5 der Gebläsekappe 4 befindet sich eine ringförmige Dichtung 11, die einerseits die Durchlaßöffnung 9.1 in der Trennwand 9 und andererseits die Einlaßöffnung 7 in der Stirnseite 5 der Gebläsekappe 4 umlaufend dicht umschließt. Zwischen der Stirnseite 5 und der Trennwand 9 ist so auf der Saugseite ein Saugraum 10 gebildet, durch den die Saugluft von der querschnittsgrößeren Durchlaßöffnung 9.1 zur demgegenüber kleineren Einlaßöffnung frei strömen kann. Die Dichtung 10 dient der elastischen Lagerung des Motorgebläses 3 gegenüber der Trennwand 9 und dämpft so die Übertragung von Schwingungen, welche das Motorgebläse 3 im Betrieb erzeugt. Gleichzeitig stellt die Dichtung 11 eine strömungstechnische Trennung zwischen der durch den Saugraum 10 repräsentierten Saugseite des Motorgebläses und dessen im Bereich seines Antriebsmotors liegenden Ausblasseite dar. Auf der Ausblasseite ist das Motorgebläse von einer Kammer 13 umschlossen, die über nicht dargestellte Ausblasöffnungen, welchen vorzugsweise ein Nachfilter zugeordnet ist, mit der freien Atmosphäre kommunizieren. Innerhalb der Kammer baut sich somit ein gewisser Überdruck auf, während im Saugraum 10 ein Unterdruck gegenüber der freien Atmosphäre bei Betrieb des Motorgebläses 3 herrscht.

Für die Überwachung der Saugfunktion insgesamt und des Füllgrades des Staubbeutels im Staubsammlerraum 2 bzw. der Feinfilterscheibe 8 ist es zweckmäßig, den Unterdruck auf der Saugseite im Saugraum 10 zwischen der Feinstaubfilterscheibe 8 und der Stirnseite 5 der Gebläsekappe 4 zu überwachen. Hierzu ist in der Dichtung 11 ein vom Saugraum 10 wegführender Luftkanal eingearbeitet, dessen Mantelfläche vorliegend allseitig vom elastischen Material der Dichtung 11 umschlossen ist. Der Luftkanal 14 führt vom Saugraum 10 in einen vom Gerätegehäuse 1 umschlossenen und mit der freien Atmosphäre verbundenen Anschlußraum 15, wo sein Durchmesser für den Anschluß unterschiedlicher Schläuche oder Adapterstücke über Teillängen 16 zylindrisch und über wenigstens eine Teillänge 17 konisch erweitert ist.

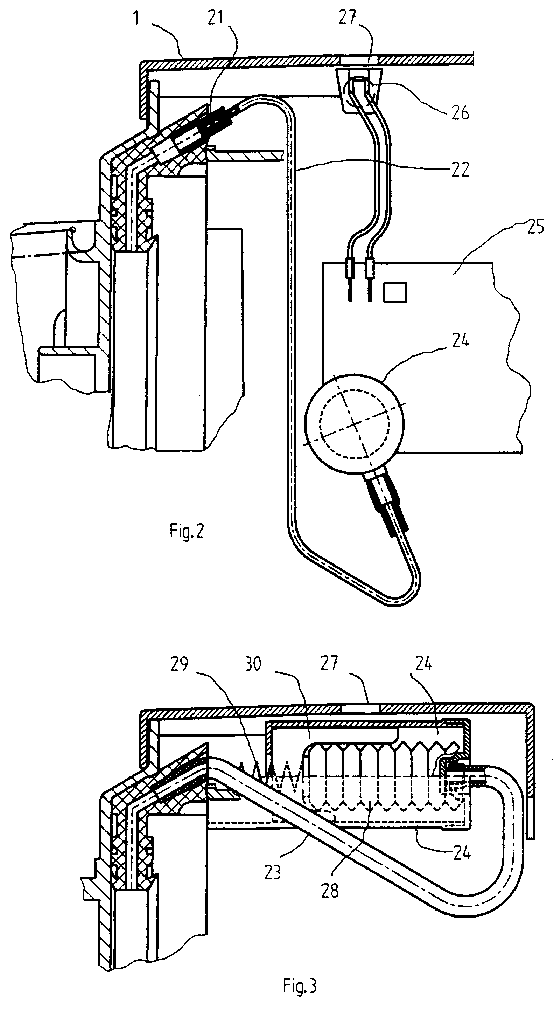

Die Kammer 13 auf der Überdruckseite des Motorgebläses 3 weist eine Kammerwand 18 auf, welche die Ausblasseite vom Anschlußraum 15 trennt. Nachdem die Dichtung 11 mit einem Zylinderansatz 19 von der Saugseite zur Ausblasseite hin auf den Mantel der Gebläsekappe 4 greift und der Luftkanal außerhalb der Gebläsekappe 4 in gleicher Richtung zum Anschlußraum 15 zu führen ist, muß die Kammerwand 18 durchbrochen werden. Hierzu weist die Dichtung 11 einen entsprechenden Dichtungsfortsatz 20 auf, der vom Luftkanal 14 durchzogen ist und einen entsprechenden Durchbruch der Kammerwand 18 luftdicht verschließt. In diesem Dichtungsfortsatz 20 ist die Erweiterung 16, 17 des Luftkanals 14 ausgebildet. Der Luftkanal 14 verläuft somit vom Saugraum 10 zunächst radial nach außen und knickt dann zur Ausblasseite bzw. zum Anschlußraum 15 hin so ab, daß er mit der Gebläselängsachse 6 einen spitzen Winkel, beispielsweise von etwa 30 Grad einschließt. Er mündet dadurch in Bezug auf die Kammerwand 18 so flach in den Anschlußraum 15, daß gemäß den Fig. 2 und 3 ein Adapterstück 21 für einen dünnen Saugschlauch 22 oder ein von Haus aus im Durchmesser größerer Schlauch 23 ohne Adapter luftdicht eingesteckt werden können, ohne eine übermäßige Knickung der Schläuche 22 bzw. 23 innerhalb des flachen Anschlußraumes 15 zu erzwingen. Die konische Erweiterung 17 ermöglicht dabei ein leichtes Einführen des Adapters 21 bzw. des freien Endes des Schlauchs 23, wobei durch weiteres Einpressen unter Ausnutzung der Elastizität ggf. beider Teile der sichere luftdichte Anschluß gewährleistet wird.

Die Schläuche 22 bzw. 23 führen jeweils zu einem Unterdrucksensor 24. Gemäß Fig. 2 ist der Unterdrucksensor 24 ein Unterdruckschalter, der auf einer Schaltungsplatine 25 festgesetzt ist und ein optisches Anzeigeelement 26 steuert, das einem von außen sichtbaren Fenster 27 in einer Wand des Gerätegehäuses 1 zugeordnet ist und einen aus der Unterdruckmessung ermittelten Fehlerzustand signalisiert. Gemäß Fig. 3 ist der Unterdrucksensor 24 als Faltenbalganordnung ausgebildet, bei der ein Faltenbalg 28 vom Unterdruck beaufschlagt wird und sich mit steigendem Unterdruck gegen die Kraft einer Feder 29 in axialer Richtung zusammenzieht. Dabei wird eine Anzeigefahne 30 in ihrer Lage verändert und signalisiert so durch das Fenster 27 Hinweise auf den Betriebszustand des Luftströmungsweges. Der Unterdrucksensor 24 befindet sich dabei wie der Anschlußraum 15 in freier Verbindung mit der Außenatmosphäre.

Insgesamt ergibt sich somit durch Ausnutzung der notwendigen Dichtung zwischen Saugseite und Ausblasseite des Motorgebläses für die Unterbringung eines Luftkanals eine einfache Anschlußmöglichkeit für einen Unterdrucksensor, die kostengünstig und montagefreundlich ist sowie eine variable Fertigungsmöglichkeit bezüglich der Art des verwendeten Unterdrucksensors bietet. Eigene, getrennt herzustellende und zu montierende Dichtungsmittel für die Verlegung einer von der Unterdruckseite wegführenden Schlauchleitung zu einem Unterdrucksensor entfallen. Selbstverständlich ist es auch möglich, den Luftkanal 14 als eine in die Oberfläche der Dichtung eingearbeitete Nut auszubilden, die in einer luftdicht an die Dichtung 11 anschließenden Kammer ausmündet, an welche der Unterdrucksensor angeschlossen werden kann, oder in welcher der Unterdrucksensor für sich angeordnet oder ausgebildet ist. In jedem Fall braucht keine besondere dichte Durchführung in einer Wandung des Staubsammlerraumes für den Anschluß eines Unterdrucksensors vorgesehen zu werden. Der Unterdrucksensor kann auch ein kontinuierlich mit dem Unterdruck variierendes elektrisches Signal abgeben. Hierzu kann der Faltenbalganordnung 28, 29, z. B. ein elektrischer Schiebewiderstand zugeordnet werden, der in einen elektrischen Steuerstromkreis einzuschalten ist. Auch andere Drucksensitive stetig sich ändernde Sensoren können zur Anwendung gelangen.

## Patentansprüche

1. Staubsauger mit einem im Gerätegehäuse vorgesehenen Staubsammlerraum, dem ein Motorgebläse in Strömungsrichtung nachgeschaltet ist, und mit einer ringförmigen Dichtung, über welche die Saugseite des Motorgebläses von dessen Ausblasseite getrennt ist, und die im Gerätegehäuse abgestützt ist, dadurch gekennzeichnet, daß in der Dichtung (11) ein Luftkanal (14) vorgesehen ist, der von der Saugseite wegführt und an den ein Unterdrucksensor (24) angeschlossen ist.

2. Staubsauger nach Anspruch 1, dadurch gekennzeichnet, daß zwischen den Unterdrucksensor (24) und den Luftkanal (14) ein Schlauch (22, 23) eingefügt ist.

3. Staubsauger nach Anspruch 2, dadurch gekennzeichnet, daß der Schlauch (22, 23) dicht in den Luftkanal (14) eingesteckt ist.

4. Staubsauger nach Anspruch 1 oder einem der folgenden, dadurch gekennzeichnet, daß der Luftkanal (14) an seinem der Unterdruckseite (10) abgewandten Ende eine Querschnittserweiterung (16, 17) aufweist.

5. Staubsauger nach Anspruch 4, dadurch gekennzeichnet, daß die Querschnittserweiterung (16, 17) zumindest über einen Teil (17) der axialen Länge konisch ausgebildet ist.

6. Staubsauger nach Anspruch 1 oder einem der folgenden, dadurch gekennzeichnet, daß der Luftkanal (14) durch eine benachbarte Wand (18) geführt ist.

7. Staubsauger nach Anspruch 1 oder einem der folgenden, dadurch gekennzeichnet, daß das Motorgebläse (3) im Bereich seiner Ausblasseite (13) mittels einer Kammerwand (18) von einem im Gerätegehäuse (1) vorgesehenen, mit der freien Atmosphäre kommunizierenden Anschlußraum (15) abgetrennt ist, dem der Unterdrucksensor (24) zugeordnet ist und daß durch die Kammerwand (18) ein vom Luftkanal (14) durchzogener Dichtungsfortsatz (20) luftdicht hindurchgeführt ist.

8. Staubsauger nach Anspruch 1 oder einem der folgenden, dadurch gekennzeichnet, daß ein Unterdrucksensor (24) ein Unterdruckschalter ist, der ein elektrisches Anzeigeelement (26, 27) steuert.

9. Staubsauger nach Anspruch 1 oder einem der folgenden, dadurch gekennzeichnet, daß ein Unterdrucksensor (24) eine Faltenbalganordnung (28, 29, 30) ist.

## Claims

1. Vacuum cleaner with a dust collection chamber provided in an appliance housing, with which a motor fan is connected in series in the flow direction, and comprising an annular seal via which the suction side of the motor fan is separated from its blow-out side and which is supported in the appliance housing, characterised in that in the seal (11) an air channel (14) is provided which leads away from the suction side and is connected to a vacuum sensor (24).

2. Vacuum cleaner according to claim 1, characterised in that a hose (22, 23) is inserted between the vacuum sensor (24) and the air channel (14).

3. Vacuum cleaner according to claim 2, characterised in that the hose (22, 23) is inserted in the air channel (14) in a sealing-tight manner.

4. Vacuum cleaner according to claim 1 or one of the subsequent claims, characterised in that the air channel (14) has on its end remote from the vacuum side a cross-sectional widening (16, 17).

5. Vacuum cleaner according to claim 4, characterised in that the cross-sectional widening (16, 17) is conically formed at least over part (17) of the axial length.

6. Vacuum cleaner according to claim 1 or one of the subsequent claims, characterised in that the air channel (14) is guided through an adjacent wall (18).

7. Vacuum cleaner according to claim 1 or one of the subsequent claims, characterised in that the motor fan (3) is in the region of its blow-out side (13) separated by means of a chamber wall (18) from a connection chamber (5) provided in the appliance housing and communicating with the free air and in that a seal continuation (20), through which the air channel (14) passes, passes in an air-tight manner through the chamber wall (18).

8. Vacuum cleaner according to claim 1 or one of the subsequent claims, characterised in that a vacuum sensor (24) is a vacuum switch which operates an electrical indicator (26, 27).

9. Vacuum cleaner according to claim 1 or one of the subsequent claims, characterised in that a vacuum sensor (24) is a concertina device (28, 29, 30).

## Revendications

1. Aspirateur comprenant une chambre collectrice de poussières qui est prévue dans l'habillage de l'appareil et qui est montée en amont d'un ventilateur de moteur dans le sens de l'écoulement, et comprenant une garniture annulaire qui sépare le côté aspiration du côté refoulement du ventilateur de moteur et qui prend appui dans l'habillage du moteur, caractérisé en ce qu'il est prévu, dans la garniture (11), un canal d'air (14) qui part du côté aspiration et est raccordé à un capteur de dépression (24).

2. Aspirateur selon la revendication 1, caractérisé en ce qu'un tube flexible (22, 23) est inséré entre le capteur de dépression (24) et le canal d'air (14).

3. Aspirateur selon la revendication 2, caractérisé en ce que le tube flexible (22, 23) est inséré de manière étanche dans le canal d'air (14).

4. Aspirateur selon la revendication 1 ou l'une des suivantes, caractérisé en ce que le canal d'air (14) présente, a son extrémité détournée du côté de dépression (10), un élargissement de la section transversale (16, 17).

5. Aspirateur selon la revendication 4, caractérisé en ce que l'élargissement (16, 17) de la section transversale est de forme conique au moins sur une partie (17) de la longueur axiale.

6. Aspirateur selon la revendication 1 ou l'une des suivantes, caractérisé en ce que le canal d'air (14) est guidé à travers une paroi voisine (18).

7. Aspirateur selon la revendication 1 ou l'une des suivantes, caractérisé en ce que le ventilateur de moteur (3) est séparé, dans la zone de son côté de refoulement (13) au moyen d'une paroi d'enceinte (18), d'une chambre de jonction (15), prévue dans l'habillage (1) de l'appareil, communiquant avec l'atmosphère libre et associée au capteur de dépression (24) et en ce que la paroi d'enceinte (18) est traversée de manière étanche à l'air par un prolongement de garniture (20) à travers lequel passe le canal d'air (14).

8. Aspirateur selon la revendication 1 ou l'une des suivantes, caractérisé en ce qu'un capteur de dépression (24) est un interrupteur de dépression qui commande un élément électrique d'affichage (26, 27).

9. Aspirateur selon la revendication 1 ou l'une des suivantes, caractérisé en ce qu'un capteur de dépression (24) est un système à soufflet (28, 29, 30).
